# EUROPÄISCHE PATENTSCHRIFT

(11) **EP 0 422 345 B1**
(45) Veröffentlichungstag und Bekanntmachung des Hinweises auf die Patenterteilung: **16.02.1994**
(21) Anmeldenummer: 90114799.1
(22) Anmeldetag: 02.08.1990
(51) Int. Cl.: B60T 15/20, B60T 15/58

(54) **Umschaltventil für Fahrzeuge**
Changeover valve for vehicles
Soupape de commutation pour véhicules

(30) Priorität: 13.10.1989 DE 3934242
(43) Veröffentlichungstag der Anmeldung: 17.04.1991
(73) Patentinhaber: GRAU GMBH, D-69123 Heidelberg (DE)
(72) Erfinder: Grüner, Hans, D-6803 Edingen - Neckarhausen (DE)
(74) Vertreter: Rehberg, Elmar, Dipl.-Ing.

(56) Entgegenhaltungen:
- DE-C- 3 809 338

## Beschreibung

Die Erfindung bezieht sich auf ein Umschaltventil für Fahrzeuge, also für Kraftfahrzeuge und Anhänger, zur wahlweisen Verbindung eines von zwei druckführenden Eingangsanschlüssen mit einem Ausgangsanschluß. Die Anwendung derartiger Umschaltventile ist sinnvoll möglich etwa bei der zweikreisigen Ansteuerung einer Bremse als Ausfallschutz oder in Verbindung mit einem nacheilenden Druckaufbau im zweiten Kreis für ABS-Systeme, bei denen ein phasenverschobener, etwa sägezahnartiger Druckverlauf der beiden Kreise wechselnd durchgesteuert wird. Auch die EP-OS 357 922 zeigt eine derartige Anwendungsmöglichkeit.

Aus der DE-OS 23 33 556 ist ein Regelventil für Fahrzeugbremsanlagen bekannt, bei dem im Ventilgehäuse eine Kolbenanordnung aus einem ersten und zweiten Hohlkolben vorgesehen ist. Der zweite Hohlkolben umgibt den ersten Hohlkolben und ist an diesem sowie im Gehäuse gleitend und dichtend geführt, so daß die Zuordnung eines Hohlkolbens zu einem anderen Hohlkolben bekannt ist. In dem inneren Hohlkolben ist ein Doppelventilkörper federnd aufgehängt, der mit einem Gehäuserand ein Auslaßventil und mit einem vorspringenden Rand am einen Steuerkolben ein Einlaß- bzw. Durchlaßventil bildet. Dieses Ventil mit seiner Kolbenanordnung wird zur Modulation des Bremsdrucks eingesetzt. Der äußere Hohlkolben besitzt zwei gleichgroße Wirkflächen, von denen die eine vom ausgesteuerten Druck beaufschlagt ist, während die andere vom Atmosphärendruck belastet wird. Die beiden Hohlkolben sind weiterhin durch eine Feder aneinander abgestützt.

Einem solchen Umschaltventil liegt die Aufgabe zugrunde, einen Ausgangsanschluß aus zwei verschiedenen Eingangsanschlüssen wahlweise zu speisen und ein schnelles und sicheres Umschalten von einem auf den anderen Eingangsanschluß bei Druckabfall oder Druckwechsel von einem auf den anderen Eingangsanschluß zu gewährleisten.

Erfindungsgemäß wird dies durch das Umschaltventil mit den im Anspruch 1 angegebenen Merkmalen erreicht. Der Hohlkolben ist nicht mehr unmittelbar dem Steuerkolben, sondern dem Doppelventilkörper zugeordnet, wobei der Hohlkolben gleichzeitig als Führung für den Doppelventilkörper dient. Der Hohlkolben, der gleichsam eine Hülse darstellt, besitzt im Bereich beider Stirnflächen gegensinnige Wirkflächen, die dazu ausgenutzt werden können, je nach Beaufschlagung zusätzliche Kräfte in der einen Wirkrichtung auf das Gehäuse und in der anderen Wirkrichtung auf den Doppelventilkörper zu übertragen. Zu diesem Zweck ist der Hohlkolben in seinem Hub durch zwei Anschläge begrenzt, von denen der eine am Gehäuse und der andere am Doppelventilkörper vorgesehen bzw. gebildet sind. Wenn der Hohlkolben an seinem gehäuseseitigen Anschlag anliegt, überträgt er die auf ihn über seine eine Wirkfläche einwirkende Kraft direkt auf das Gehäuse und hält damit diese Kraft von dem Doppelventilkörper fern. In der anderen Stellung, in der der Hohlkolben an dem Anschlag des Doppelventilkörpers anliegt, überträgt er eine zusätzliche Kraft auf den Doppelventilkörper in Schließrichtung, so daß diese Kraft dazu benutzt werden kann, das entsprechende Durchlaßventil zu schließen. Hierdurch wird gleichzeitig die Dichtkraft bei geschlossenem Durchlaßsitz vergrößert. Andererseits wird es möglich, die Feder, auf der sich der Doppelventilkörper abstützt, in ihrer Kraft geringer zu dimensionieren. Diese geringere Dimensionierung der Feder des Doppelventilkörpers ist wiederum vorteilhaft für eine kleine Ansprechstufe des Umschaltventils, also eine kleine Gegenkraft beim Öffnen des ersten Durchlaßventils. Die beiden Anschlüsse, die auf der einen Seite der gemeinsamen Dichtfläche des Doppelventilkörpers angeordnet sind, können je nach Anwendungsfall angeschlossen werden, beispielsweise an zwei Steuerleitungen eines Zweikreisbremsventils. Es ist auch möglich, daß die beiden Anschlüsse an getrennte Steuerleitungen angeschlossen sind. Schließlich ergibt sich die Möglichkeit, auch an einen Anschluß von beiden einen Vorratsbehälter anzuschließen. Auf der anderen Seite der Dichtfläche des Doppelventilkörpers ist über den Ausgangsanschluß ein Verbraucher angeschlossen, also beispielsweise eine Bremsleitung oder eine Bremszylinderleitung. Für die Anwendung der vorliegenden Erfindung ist es ohne Belang, auf welchem Weg die Steuerkammer des Steuerkolbens beaufschlagt wird, ob über eine getrennte Steuerleitung oder über eine solche Steuerleitung, die auf der einen Seite der Dichtfläche des Doppelventilkörpers angeordnet ist. In diese zu der Steuerkammer des Steuerkolbens führenden Leitung kann auch ein Magnetventil eingeschaltet sein, welches bei Erreichen eines bestimmten Steuerdrucks abschaltet bzw. sperrt.

Es besteht die Möglichkeit, entweder nur einen äußeren, den Doppelventilkörper umgebenden Hohlkolben vorzusehen. Für andere Anwendungsfälle genügt es, nur einen inneren, im Doppelventilkörper und im Ventilgehäuse geführten Hohlkolben vorzusehen. Für manche Anwendungsfälle ist es auch sinnvoll, den inneren und äußeren Hohlkolben gleichzeitig zu verwirklichen, wobei die jeweiligen unterschiedlichen Wirkflächen in Verbindung mit den jeweiligen Drücken dazu ausgenutzt werden, um zusätzlich einwirkende Kräfte auf den Doppelventilkörper und/oder den Steuerkolben auszuüben.

Wenn der Hohlkolben den Doppelventilkörper umgebend vorgesehen ist und zwischen einem Anschlag am Ventilgehäuse und einem Anschlag am Doppelventilkörper begrenzt beweglich gelagert ist, reicht diese Ausbildung aus, um einen Ausgangsanschluß wahlweise mit zwei Steuerleitungen zu verbinden, wenn in der ersten Steuerleitung mit einem Druckabfall auf Atmosphärendruck zu rechnen ist und in diesem Fall die Ausgangsleitung mit der anderen Steuerleitung verbunden werden soll. Trotzdem kann der Hohlkolben hier mit gleichen oder ungleich großen Wirkflächen in den beiden Betätigungsrichtungen versehen sein, um auf diese Art und Weise die gewünschten bzw. notwendigen zusätzlichen Kräfte zur Einwirkung zu bringen.

Andererseits ist es aber möglich, daß der Hohlkolben in dem Doppelventilkörper dichtend geführt ist und einen Steuerraum abteilt, der über eine Verbindungsleitung in dauernder Verbindung mit der Einströmkammer bzw. der Steuerleitung steht. Die Verbindungsleitung ist zweckmäßig als radiale Bohrung in dem Doppelventilkörper angeordnet. Der auf diese Weise geschaffene innere Hohlkolben umgibt den Doppelventilkörper an seinen beiden axialen Enden und ist so unverlierbar am Doppelventilkörper begrenzt beweglich gelagert. Ein solcher innerer Hohlkolben gestattet es, je nach seiner Ausbildung eine Zusatzkraft auf den Doppelventilkörper oder auf den Steuerkolben auszuüben. Letzteres ist besonders sinnvoll, um das zweite Durchlaßventil auch dann zu öffnen, wenn in der bevorzugten Steuerleitung nicht oder nicht immer mit einem Druckabfall auf Atmosphärendruck, sondern lediglich nur mit einer relativen Druckerniedrigung auf einen über Atmosphärendruck liegenden Druck zu rechnen ist. Dann kann über diesen inneren Hohlkolben das zweite Durchlaßventil geöffnet werden, so daß der Ausgangsanschluß mit der zweiten Steuerleitung in Verbindung kommt. Der in dem Doppelventilkörper angeordnete Hohlkolben weist zu diesem Zweck einen den Fortsatz des Steuerkolbens zugeordneten, dem Öffnen des zweiten Durchlaßventils dienenden Druckfortsatz auf, der auch in der Weise verwirklicht sein kann, daß eine entsprechende Verlängerung des Fortsatzes des Steuerkolbens in den hohlen Doppelventilkörper hineinreicht.

Wenn dem Doppelventilkörper und dem Steuerkolben sowohl ein äußerer wie auch ein innerer Hohlkolben zugeordnet sind, besteht in zweifacher Weise die Möglichkeit, Zusatzkräfte zur Einwirkung zu bringen. Der innere Hohlkolben ist dabei mit einer ersten Dichtung am Doppelventilkörper und mit einer zweiten Dichtung am äußeren Hohlkolben geführt. Er bekommt damit auf beiden Seiten gleichgroße Wirkflächen, die von unterschiedlichen Drücken beaufschlagt sind, woraus die Zusatzkraft resultiert.

Der Hohlkolben kann auf beiden Seiten gleich große Wirkflächen aufweisen, so daß die von dem Hohlkolben zu erbringende zusätzliche Kraft proportional zu der Druckdifferenz ist. Bei unterschiedlich großer Gestaltung der Wirkflächen des Hohlkolbens ergibt sich eine zusätzliche Beeinflussungsmöglichkeit der über den Hohlkolben auszunutzenden Zusatzkraft.

Der Doppelventilkörper weist eine in Schließrichtung des aus dem Rand und dem Doppelventilkörper gebildeten ersten Durchlaßventils wirkende, über den ersten Anschluß beaufschlagbare Wirkfläche auf, die etwa gleich groß wie die ausgangsseitige Kreisringfläche zwischen dem Rand und dem Durchlaßsitz ausgebildet ist. Bei dieser gleich großen Ausbildung der Wirkflächen ist der Doppelventilkörper bei geöffnetem ersten Durchlaßventil in seinem Druck ausgeglichen, so daß zum Öffnen des ersten Durchlaßventils nur die Kraft der den Doppelventilkörper abstützenden Feder überwunden werden muß. Es ist aber auch möglich, die in Schließrichtung beaufschlagbare Wirkfläche des Doppelventilkörpers etwas größer als die entgegenwirkende Kreisringfläche zu wählen, wobei dann im Sinne einer kleinen Ansprechstufe die den Doppelventilkörper belastende Feder noch entsprechend schwächer dimensioniert werden kann. Andererseits ist es die Aufgabe des Hohlkolbens mit seiner in Schließrichtung des ersten Durchlaßventils auf den Doppelventilkörper wirkenden Wirkfläche eine zusätzliche Schließkraft auf das erste Durchlaßventil herbeizuführen, wenn das zweite Durchlaßventil geöffnet ist, also der zweite Anschluß mit dem Ausgangsanschluß verbunden ist, so daß über den zweiten Anschluß herangeführte Druckluft nicht in den ersten Anschluß überströmen kann. Wenn nämlich dieser erste Anschluß bzw. die daran angeschlossene Leitung defekt ist, könnte sonst die Funktion des Verbrauchers ausfallen, weil dieser über den zweiten Anschluß nicht mehr ordnungsgemäß mit Druckluft versorgt bzw. beaufschlagt wird.

Die in Anlagerichtung des Hohlkolbens an dem Doppelventilkörper wirkende Wirkfläche, die über den zweiten Anschluß beaufschlagbar ist kann zweckmäßig gleichgroß oder größer als die ausgangsseitige Kreisringfläche zwischen dem Rand und dem Durchlaßsitz ausgebildet sein. Bei gleich großer Ausbildung der Wirkfläche des Hohlkolbens wie die abströmseitig angeordnete Kreisringfläche ist die gemeinsame Baueinheit aus Doppelventilkörper und Hohlkolben druckentlastet, so daß die Schließkraft des ersten Durchlaßventils durch die Feder des Doppelventilkörpers bestimmt wird. Bei vergleichsweise größerer Ausbildung der Wirkfläche des Hohlkolbens wird die Schließkraft entsprechend vergrößert.

Die dem Doppelventilkörper zugeordnete Feder kann gehäuseseitig oder aber auch auf dem Hohlkolben abgestützt sein. Im allgemeinen ist einer gehäuseseitigen Abstützung der Vorzug zu geben, weil dann die Kraft der Feder der Wirkfläche des Hohlkolbens nicht entgegenwirkt.

Dem Steuerkolben kann eine Steuerkammer zugeordnet sein, die über eine Verbindungsleitung mit dem einen Eingangsanschluß in Verbindung steht, wobei in der Verbindungsleitung ein Magnetventil angeordnet ist, welches den Durchgang in der Verbindungsleitung entweder herstellt oder absperrt. Durch die geometrische Gestaltung und Anordnung einer der Steuerkammer zugekehrten großen Wirkfläche des Steuerkolbens wird eine kleine Ansprechstufe erreicht. Bei Verwendung eines Magnetventils in der Verbindungsleitung zu der Steuerkammer ergibt sich vorteilhaft die Möglichkeit, den Druck in der Steuerkammer gezielt und schnell zu steuern.

Bevorzugte Ausführungsformen des Umschaltventils werden anhand der beiliegenden Zeichnungen beschrieben. Es zeigen:
- Figur 1: einen Querschnitt durch eine erste Ausführungsform des Umschaltventils mit einem äußeren Hohlkolben in Ausgangsstellung,
- Figur 2: eine geschnittene Teildarstellung einer zweiten Ausführungsform mit einem inneren und einem äußeren Hohlkolben in einer ersten Arbeitsstellung, in der die erste Steuerleitung mit der Ausgangsleitung verbunden ist und
- Figur 3: eine zweite Arbeitsstellung des Umschaltventils gemäß Figur 2, in welcher die Ausgangsleitung mit der zweiten Steuerleitung verbunden ist.

In einem zweckmäßig mehrteilig ausgebildeten Ventilgehäuse 1 ist ein mit einer Rollmembran versehener Steuerkolben 2 vorgesehen, der im Ventilgehäuse 1 eine Steuerkammer 3 abteilt und auf der anderen Seite einen Raum 4 begrenzt, der über eine Entlüftungsöffnung 5 dauernd an die Atmosphäre angeschlossen ist. Der Steuerkolben 2 weist einen Fortsatz 6 auf, der im Ventilgehäuse mit Hilfe der Dichtungen 7, 8 und 9 dichtend geführt ist. Der Fortsatz 6 trägt an seinem freien Ende einen Durchlaßsitz 10.

Im Ventilgehäuse ist in einer Einströmkammer 11 ein Doppelventilkörper 12 auf einer Feder 13 abgestützt, die sich andererseits an einem Deckel 14 gehäuseseitig abstützt. Der Doppelventilkörper 12 bildet mit einem eingezogenen Rand 15 des Ventilgehäuses 1 ein erstes Durchlaßventil 12, 15 und mit dem Durchlaßsitz 10 ein zweites Durchlaßventil 12, 10. Die Einströmkammer 11 steht in dauernder Verbindung mit einem Anschluß 16, der einen Eingangsanschluß darstellt, über die eine erste Steuerleitung 17 herangeführt ist. Im Deckel 14 des Ventilgehäuses 1 ist ein zweiter Anschluß 18 gebildet, der ebenfalls einen Eingangsanschluß darstellt und zu dem eine zweite Steuerleitung 19 herangeführt ist. Der Doppelventilkörper 12 ist hohl ausgebildet. Beide Anschlüsse 16 und 18 sind auf der einen Seite des Doppelventilkörpers 12 vorgesehen. Auf der anderen Seite der Schließfläche des Doppelventilkörpers 12 ist im Ventilgehäuse 1 eine Abströmkammer 20 gebildet, die in dauernder Verbindung zu einem Ausgangsanschluß 21 steht, an den eine zu einem Verbraucher führende Ausgangsleitung 22 angeschlossen ist.

Der Doppelventilkörper 12 ist mit Hilfe einer Dichtung 23 in einem Hohlkolben 24 gleitend und dichtend gelagert. Der Hohlkolben 24 weist eine Dichtung 25 auf, mit der er gleitend und dichtend in dem Deckel 14 des Ventilgehäuses 1 gelagert ist. Der Doppelventilkörper 12 ist damit von dem Hohlkolben 24 umgeben. Der Hohlkolben 24 besitzt zwei Anschläge 26 und 27, mit deren Hilfe er in seinem Hub begrenzt den Ventilkörper 12 umgebend im Ventilgehäuse 1 gelagert ist. Der Anschlag 26 liegt in der dargestellten Stellung an dem Deckel 14 und damit am Ventilgehäuse 1 an. Mit dem anderen Anschlag 27 kann der Hohlkolben 24 bei entsprechender Beaufschlagung an dem Doppelventilkörper 12 zur Anlage gelangen. Begrenzt durch die beiden Dichtungen 25 und 23 weist der Hohlkolben 24 eine Wirkfläche 28 in Richtung auf den Doppelventilkörper 12 und entgegengesetzt dazu eine gleichgroße Wirkfläche 29 auf. Diese beiden Wirkflächen 28 und 29 sind hier gleichgroß gestaltet wie eine Kreisringfläche 30, die durch die Dimensionierung des Durchlaßsitzes 10 und des eingezogenen Randes 15 festgelegt wird. Mit anderen Worten weist der eingezogene Rand 15 einen der Dichtung 25 entsprechenden Durchmesser auf, während der Durchmesser des Durchlaßsitzes 10 dem Durchmesser der Dichtung 23 entspricht. Der Doppelventilkörper 12 besitzt eine Wirkfläche 31, die über die Einströmkammer 11 beaufschlagbar ist und deren Größe durch die Durchmesserdifferenz zwischen dem eingezogenen Rand 15 und der Dichtung 23 festgelegt ist.

Von der Einströmkammer 11 führt eine Leitung 32 zu einem Magnetventil 33, dessen Anker 34 in seinem Hub einstellbar ausgebildet ist, um eine Drosselwirkung und damit eine Überströmzeit einstellbar zu machen. Das Magnetventil 33 ist in der nicht erregten Stellung, wie dargestellt, geöffnet, so daß die Leitung 32 an eine Leitung 35 angeschlossen ist, die sich zwischen den beiden Dichtungen 7 und 8 in einer Ringkammer 36 und in einem anschließenden Kanal 37 fortsetzt, der zur Steuerkammer 3 führt. Die Steuerkammer 3 ist großvolumig ausgebildet und die an sie anschließende Wirkfläche besitzt einen entsprechend großen Durchmesser.

Der Fortsatz 6 des Steuerkolbens 2 besitzt einen weiteren Kanal 38, der einerseits an den Raum 4 anschließt und andererseits durch eine Kugel 39 verschlossen ist. Ein radialer Abzweig 40 endet zwischen den Dichtungen 8 und 9. Damit ist sichergestellt, daß für den Fall, daß die Dichtung 9 defekt werden sollte Druckluft aus der Abströmkammer 20 nicht über den Kanal 37 in die Steuerkammer 3 gelangen kann, sondern über den Kanal 38 und den Raum 4 sowie die Entlüftungsöffnung 5 in die Atmosphäre abgeleitet wird, so daß eine Fehlschaltung des Steuerkolbens 2 vermieden ist.

Die Wirkungsweise des Umschaltventils kann wie folgt ablaufen:
An dem ersten Anschluß 16 möge eine etwas bevorzugte erste Steuerleitung 17 und an dem Anschluß 18 eine zweite Steuerleitung 19 angeschlossen sein. Wenn beispielsweise über die erste Steuerleitung 17 zeitlich etwas voreilend ein Steuerdruck in die Einströmkammer 11 gelangt und sich über die Leitungen 32 und 35 letztlich bis in die Steuerkammer 3 fortsetzt, wird das zweite Durchlaßventil 12, 10 geschlossen und das erste Durchlaßventil 12, 15 geöffnet, so daß Druckluft über die Steuerleitung 17 in die Außströmkammer 20 und damit über den Ausgangsanschluß 21 in die Ausgangsleitung 22 zum Verbraucher geschickt wird. Der in der Steuerleitung 19 nacheilend anstehende Druck vermag nichts zu bewirken, da das zweite Durchlaßventil 12, 10 geschlossen ist. Wenn die über die Steuerleitungen 17 und 19 eingesteuerten Drücke gleich groß sind, verbleibt der Hohlkolben 24 druckausgeglichen mit seinem Anschlag 26 in der Ausgangsstellung am Deckel 14 des Ventilgehäuses 1.

Nunmehr kann das Magnetventil 33 umgeschaltet werden, beispielsweise in Abhängigkeit von dem Erreichen eines in der Steuerkammer 3 einwirkenden Druckes, so daß die Leitungen 32 und 35 voneinander abgetrennt werden. Dies kann beispielsweise schon beim Erreichen eines relativ niedrigen Druckes in der Steuerkammer 3, beispielsweise in der Größenordnung von 0,3 bis 0,5 bar, erfolgen. Dieser relativ niedrige Druck wird somit in der Steuerkammer 3 eingesperrt, während der Druck in der Steuerleitung 17 weiter ansteigen kann. Die Ausgangsleitung 22 wird also bei intakter Anlage über die Steuerleitung 17 mit Druckluft versorgt.

Tritt jedoch in der Steuerleitung 17 ein Defekt ein (z. B. ein Bruch der Steuerleitung 17), der sich somit in einem Druckabfall äußert, während in der Steuerleitung 19 ordnungsgemäß Druck ansteht, dann wird die Wirkfläche 29 des Hohlkolbens 24 entsprechend schwächer beaufschlagt als die Wirkfläche 28, so daß der Hohlkolben 24 seinen Hub ausführt und sich mit seinem Anschlag 27 an dem Doppelventilkörper 12 anlegt. Dies führt zum Schließen des ersten Durchlaßventils 12, 15. Die Kraft, die über den Hohlkolben 24 auf den Doppelventilkörper 12 übertragen wird äußert sich in einer erhöhten Schließkraft auf das erste Durchlaßventil 12, 15. Anschließend wird das zweite Durchlaßventil 12, 10 geöffnet, indem das Magnetventil 33 wieder in die Stellung zurückschaltet, in der die beiden Leitungen 32 und 35 miteinander verbunden sind, so daß die in der Steuerkammer 3 eingesperrte Druckluft über die defekte Stelle in der Steuerleitung 17 in die Atmosphäre ausströmen kann und sich in der Steuerleitung 17 und in der Steuerkammer Atmosphärendruck einstellt. Damit öffnet das zweite Durchlaßventil 12, 10, so daß Druckluft aus der Steuerleitung 19 in die Ausgangsleitung 22 überströmt, so daß der dort angeschlossene Verbraucher nunmehr über diesen zweiten Weg mit Druckluft versorgt wird. Durch die über den Hohlkolben 24 auf das geschlossen gehaltene erste Durchlaßventil 12, 15 einwirkende erhöhte Schließkraft ist sichergestellt, daß eine Überströmung von Druckluft aus der Steuerleitung 19 in die Steuerleitung 17 mit ihrem Defekt nicht stattfinden kann. Damit wird ein Luftverlust vermieden.

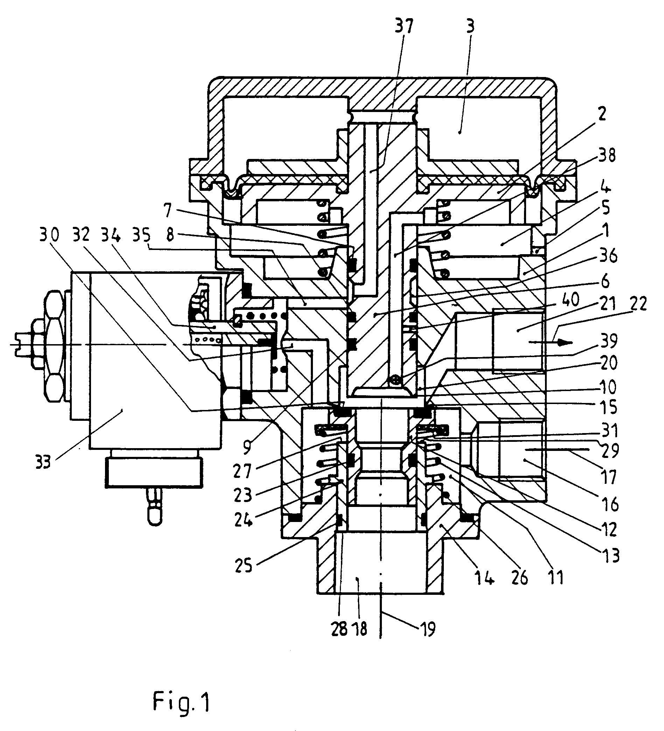

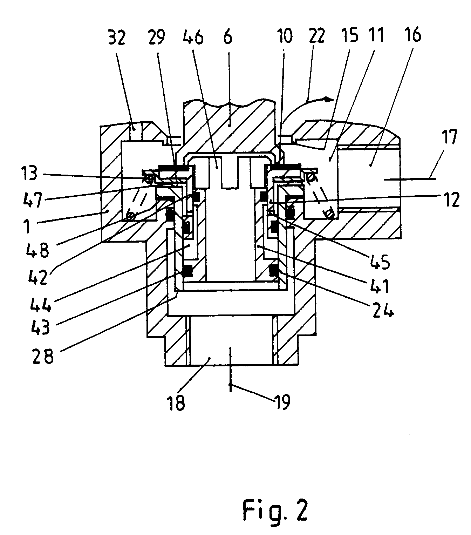

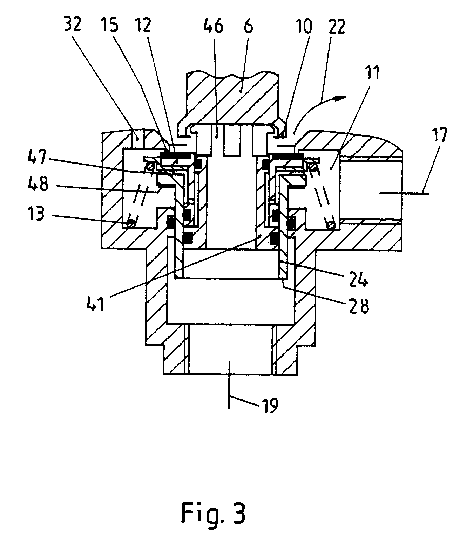

In den Figuren 2 und 3 ist ein zweites Ausführungsbeispiel des Umschaltventils nur teilweise angedeutet. Diese Ausführungsform wird durch die übrigen Elemente, wie sie in Figur 1 an dem ersten Ausführungsbeispiel des Umschaltventils verdeutlicht wurden, ergänzt. Der Doppelventilkörper 12 ist hier außen von dem Hohlkolben 24 umgeben, der in prinzipiell gleicher Weise ausgebildet und angeordnet ist wie bei dem Ausführungsbeispiel der Figur 1. Zusätzlich ist jedoch noch ein innerer Hohlkolben 41 vorgesehen, der über eine erste Dichtung 42 dichtend und gleitend im Doppelventilkörper 12 und über eine zweite Dichtung 42 im äußeren Hohlkolben 24 geführt ist. Der innere Hohlkolben 41 schließt mit dem Doppelventilkörper 12 und dem äußeren Hohlkolben 24 einen Steuerraum 44 ein, der über eine Verbindungsleitung 45, die als radiale Bohrung im Doppelventilkörper 12 ausgebildet ist, in dauernder Verbindung zu der Einströmkammer 11 und damit zur ersten Steuerleitung 17 steht. Der innere Hohlkolben 41 wird somit auf gleichgroßen, gegensinnig gerichteten Wirkflächen von den Drücken in den beiden Steuerleitungen 17 und 19 beaufschlagt, so daß er bei gleichen Drücken druckentlastet angeordnet ist, während er bei unterschiedlichen Drücken eine entsprechend der Druckdifferenz proportionale Kraft in der einen oder anderen Richtung ausübt. Diese zusätzliche Differenzkraft wird insbesondere dazu benutzt, um das zweite Durchlaßventil 12, 10 nach einem Defekt, insbesondere Bruch, in der Steuerleitung 17 zu öffnen. Zu diesem Zweck weist der innere Hohlkolben 41 einen Druckfortsatz 46 auf, der in Form von radial durchbrochenen Rippen ausgebildet sein kann und im Einwirkfall gegen den Fortsatz 6 des Steuerkolbens 2 drückt, wie dies in Figur 3 dargestellt ist, so daß in dieser Stellung das erste Durchlaßventil 12, 15 geschlossen und das zweite Durchlaßventil 12, 10 geöffnet gehalten wird.

Während der innere Hohlkolben 41 den Doppelventilkörper 12 beidendig übergreift, so daß er somit in Abhängigkeit von dem Hub des Doppelventilkörpers 12 begrenzt axial verschiebbar gelagert ist, weist der äußere Hohlkolben 24 an einem sich radial erstreckenden Kragen sowohl auf der Ober- wie auch der Unterseite Rippen 47, 48 auf, die dazu dienen, die Druckbeaufschlagung der entsprechenden Wirkflächen zu vereinfachen und ein Verkleben der verschiedenen Teile aneinander zu verhindern.

Das Umschaltventil gemäß den Figuren 2 und 3 gestattet die folgende Wirkungsweise:
Wenn an dem ersten Anschluß 16 eine zeitlich voreilende erste Steuerleitung 17 und an dem Anschluß 18 eine zweite, vergleichsweise nacheilende Steuerleitung 19 angeschlossen ist, gelangt Druckluft zunächst in die Einströmkammer 11 und über die Leitungen 32 und 35 letztendlich bis in die Steuerkammer 3, so daß sich bereits bei geringem Druckaufbau der Steuerkolben 2 in Bewegung setzt. Sein Fortsatz 6 setzt auf dem Doppelventilkörper 12 auf, wodurch das zweite Durchlaßventil 12, 10 geschlossen und in der fortgesetzten Bewegung das erste Durchlaßventil 12, 15 geöffnet wird. Diese Öffnungsbewegung wird beendet, indem der Doppelventilkörper 12 sich über den Kragen des äußeren Hohlkolbens 24 am Ventilgehäuse 1 abstützt, wie dies in Figur 2 dargestellt ist. Bereits bei einem geringen Druckaufbau in der Steuerleitung 17 wird das Magnetventil 33 umgeschaltet, die Leitungen 32 und 35 voneinander abgesperrt und der geringe Steuerdruck in der Steuerkammer 3 eingesperrt. Über das geöffnete erste Durchlaßventil 12, 15 ist die Steuerleitung 17 an die Ausgangsleitung 22 angeschlossen, so daß der Verbraucher, z. B. eine Radbremse, auf diese Art und Weise mit Druckluft versorgt wird. Je nach Bremsintensität kann es sich dabei um einen modulierten Bremsdruck in unterschiedlicher Höhe handeln. Mit der Steuerleitung 19, die zeitlich etwas nacheilt, kann der von einem Bremsventil ausgesteuerte pneumatisch Druck verbunden sein, der insoweit nicht höher wird als der Druck in der Steuerleitung 17, diesem jedoch zeitlich nacheilt. Nachdem auch hier die Offenstellung des ersten Durchlaßventils 12, 15 erreicht ist, kann der nachfolgende Druckanstieg in der zweiten Steuerleitung 19 nicht zu einer Schaltbewegung der Teile gemäß Figur 2 führen.

Tritt jedoch ein relativer Druckabfall (oder auch ein absoluter Druckabfall auf Atmosphärendruck) in der ersten Steuerleitung 17 auf, beispielsweise eine Druckabsenkung von 7 auf 5 bar, während in der zweiten Steuerleitung 19 nach wie vor beispielsweise 7 bar anstehen, dann wirkt sich diese Druckdifferenz über die Wirkflächen 28 und 29 des äußeren Hohlkolbens 24 zunächst in der Weise aus, daß sich der äußere Hohlkolben 24 nach oben in Bewegung setzt und dabei sowohl den Doppelventilkörper 12 wie auch den inneren Hohlkolben 41 mitnimmt. Diese Bewegung endet mit dem Aufsetzen des Doppelventilkörpers 12 auf den vorspringenden Gehäuserand 15 des Ventilgehäuses 1 und damit mit dem Schließen des ersten Durchlaßventils 12, 15. Gleichzeitig bzw. überlagernd wirkt sich der Differenzdruck auch auf den inneren Hohlkolben 41 aus, indem der Steuerraum 44 mit 5 bar beaufschlagt wird, während der innere Hohlkolben 41 ansonsten mit 7 bar beaufschlagt wird. Hierdurch entsteht eine nach oben gerichtete Zusatzkraft, mit den inneren Hohlkolben 41 relativ nach oben verschiebt. Dabei gelangt der Druckfortsatz 46 des inneren Hohlkolbens 41 an den Fortsatz 6 des Steuerkolbens 2 in Anlage und nimmt diesen nach oben mit, wodurch der Steuerkolben 2 verschoben und das zweite Durchlaßventil 12, 10 geöffnet wird. Dabei ist die Abstimmung so getroffen, daß die Bewegung des Steuerkolbens 2 trotz des in der Steuerkammer 3 eingesperrten, relativ niedrigen Drucks möglich ist. Mit dem Erreichen der Stellung der Teile gemäß Figur 3 ist die zweite Steuerleitung 19 an die Ausgangsleitung 22 angeschlossen, während die erste Steuerleitung 17 abgesperrt ist. Der Differenzdruck auf den äußeren Hohlkolben 24 äußert sich in einer die Kraft der Feder 13 übersteigenden Schließkraft auf das erste Durchlaßventil 12, 15, so daß auch hier ein Druckverlust der Steuerleitung 19 in die gebrochene Steuerleitung 17 nicht stattfindet.

### Bezugszeichenliste:

- 1 =: Ventilgehäuse
- 2 =: Steuerkolben
- 3 =: Steuerkammer
- 4 =: Raum
- 5 =: Entlüftungsöffnung
- 6 =: Fortsatz
- 7 =: Dichtung
- 8 =: Dichtung
- 9 =: Dichtung
- 10 =: Durchlaßsitz
- 11 =: Einströmkammer
- 12 =: Doppelventilkörper
- 13 =: Feder
- 14 =: Deckel
- 15 =: Rand
- 16 =: Anschluß
- 17 =: Steuerleitung
- 18 =: Anschluß
- 19 =: Steuerleitung
- 20 =: Abströmkammer
- 21 =: Ausgangsanschluß
- 22 =: Ausgangsleitung
- 23 =: Dichtung
- 24 =: Hohlkolben
- 25 =: Dichtung
- 26 =: Anschlag
- 27 =: Anschlag
- 28 =: Wirkfläche
- 29 =: Wirkfläche
- 30 =: Kreisringfläche
- 31 =: Wirkfläche
- 32 =: Leitung
- 33 =: Magnetventil
- 34 =: Anker
- 35 =: Leitung
- 36 =: Ringkammer
- 37 =: Kanal
- 38 =: Kanal
- 39 =: Kugel
- 40 =: Abzweig
- 41 =: Hohlkolben
- 42 =: Dichtung
- 43 =: Dichtung
- 44 =: Steuerraum
- 45 =: Verbindungsleitung
- 46 =: Druckfortsatz
- 47 =: Rippen
- 48 =: Rippen

## Patentansprüche

1. Umschaltventil für Fahrzeuge zur wahlweisen Verbindung eines von zwei druckführenden Eingangsanschlüssen (16, 18) mit einem Ausgangsanschluß (21) mit folgenden Merkmalen
- in einem Ventilgehäuse (1) ist ein hohler Doppelventilkörper (12) federnd aufgehängt und bildet mit einem eingezogenen Rand (15) des Ventilgehäuses (1) ein erstes Durchlaßventil (12, 15),
- in dem Ventilgehäuse (1) ist ein Steuerkolben (2) abgedichtet verschiebbar gelagert und bildet mit dem Doppelventilkörper (12) ein zweites Durchlaßventil (10, 12),
- dem Doppelventilkörper (12) ist mindestens ein Hohlkolben (24, 41) zugeordnet, der abgedichtet und zwischen Anschlägen begrenzt beweglich gelagert ist,
- zu den beiden Durchlaßventilen ist jeweils einer der beiden Eingangsanschlüsse (16, 18) herangeführt,
- der Hohlkolben (24, 41) weist eine erste, von dem Eingangsanschluß (16) beaufschlagte Wirkfläche und eine zweite, vom zweiten Eingangsanschluß (18) beaufschlagte und gegensinnig zur ersten angeordnete Wirkfläche auf.

2. Umschaltventil nach Anspruch 1, dadurch gekennzeichnet, daß der Hohlkolben (24) den Doppelventilkörper (12) umgebend vorgesehen ist und zwischen einem Anschlag am Ventilgehäuse (1) und einem Anschlag am Doppelventilkörper (12) begrenzt beweglich gelagert ist.

3. Umschaltventil nach Anspruch 1 oder 2, dadurch gekennzeichnet, daß der Hohlkolben (41) in dem Doppelventilkörper (12) dichtend geführt ist und einen Steuerraum (44) abteilt, der über eine Verbindungsleitung (45) in dauernder Verbindung mit der Einströmkammer (11) bzw. der Steuerleitung (17) steht.

4. Umschaltventil nach Anspruch 3, dadurch gekennzeichnet, daß der in dem Doppelventilkörper (12) angeordnete Hohlkolben (41) einen den Fortsatz (6) des Steuerkolbens (2) zugeordneten, dem Öffnen des zweiten Durchlaßventils (10, 12) dienender Druckfortsatz (46) aufweist.

5. Umschaltventil nach einem der Ansprüche 1 bis 4, dadurch gekennzeichnet, daß dem Doppelventilkörper (12) und dem Steuerkolben (2) ein äußerer und ein innerer Hohlkolben (24, 41) zugeordnet sind.

6. Umschaltventil nach Anspruch 5, dadurch gekennzeichnet, daß der äußere oder der innere Hohlkolben (24) nach beiden Seiten gleichgroße Wirkflächen (27, 28) aufweist.

7. Umschaltventil nach einem der Ansprüche 1 bis 6, dadurch gekennzeichnet, daß der Doppelventilkörper (12) eine in Schließrichtung des aus dem Rand (15) und dem Doppelventilkörper (12) gebildeten ersten Durchlaßventils (12, 15) wirkende, über den ersten Anschluß (16) beaufschlagbare Wirkfläche (31) aufweist, die etwa gleich groß wie die ausgangsseitige Kreisringfläche (30) zwischen dem Rand (15) und dem Durchlaßsitz (10) ausgebildet ist.

8. Umschaltventil nach einem der Ansprüche 1 bis 7, dadurch gekennzeichnet, daß die in Anlagerichtung des Hohlkolbens (24) an dem Doppelventilkörper (12) wirkende Wirkfläche (28), die über den zweiten Anschluß (18) beaufschlagbar ist, gleichgroß oder größer als die ausgangsseitige Kreisringfläche (30) zwischen dem Rand (15) und dem Durchlaßsitz (10) ausgebildet ist.

9. Umschaltventil nach Anspruch 8, dadurch gekennzeichnet, daß die dem Doppelventilkörper (12) zugeordnete Feder (13) gehäuseseitig abgestützt ist.

10. Umschaltventil nach Anspruch 1, dadurch gekennzeichnet, daß dem Steuerkolben (2) eine Steuerkammer (3) zugeordnet ist, die über eine Verbindungsleitung (32, 35, 37) mit dem einen Eingangsanschluß (16) in Verbindung steht, und daß in der Verbindungsleitung ein Magnetventil (33) angeordnet ist, welches den Durchgang in der Verbindungsleitung entweder herstellt oder absperrt.

## Claims

1. Change-over valve for vehicles for the optional connection of one of two pressure-carrying input connections (16, 18) to an output connection (21), having the following features
- in a valve housing (1), a hollow double valve body (12) is resiliently suspended and forms with a drawn-in rim (15) of the valve housing (1) a first gate valve (12, 15),
- in the valve housing (1), a control plunger (2) is mounted in a sealed-off and displaceable manner and forms with the double valve body (12) a second gate valve (10, 12),
- the double valve body (12) is assigned at least one hollow plunger (24, 41), which is sealed-off and mounted in a limitedly movable manner between stops,
- one of the two input connections (16, 18) is respectively brought up to the two gate valves,
- the hollow plunger (24, 41) has a first effective surface, acted upon by the input connection (16), and a second effective surface, acted upon by the second input connection (18) and arranged oppositely to the first effective surface.

2. Change-over valve according to Claim 1, characterized in that the hollow plunger (24) is provided such that it surrounds the double valve body (12) and is mounted in a limitedly movable manner between a stop on the valve housing (1) and a stop on the double valve body (12).

3. Change-over valve according to Claim 1 or 2, characterized in that the hollow plunger (41) is guided in a sealing manner in the double valve body (12) and divides off a control space (44), which is in permanent connection via a connecting line (45) with the inflow chamber (11) or the control line (17).

4. Change-over valve according to Claim 3, characterized in that the hollow plunger (41), arranged in the double valve body (12), has a pressure continuation (46), assigned to the continuation (6) of the control plunger (2) and serving for the opening of the second gate valve (10, 12).

5. Change-over valve according to one of Claims 1 to 4, characterized in that the double valve body (12) and the control plunger (2) are assigned an outer and an inner hollow plunger (24, 41).

6. Change-over valve according to Claim 5, characterized in that the outer or the inner hollow plunger (24) [sic] has effective surfaces (27, 28) of equal size on both sides.

7. Change-over valve according to one of Claims 1 to 6, characterized in that the double valve body (12) has an effective surface (31) acting in the closing direction of the first gate valve (12, 15), formed by the rim (15) and the double valve body (12), and able to be acted upon via the first connection (16) which is designed to be approximately the same size as the annular surface (30) on the output side between the rim (15) and the gate seat (10).

8. Change-over valve according to one of Claims 1 to 7, characterized in that the effective surface (28) acting in the bearing direction of the hollow plunger (24) against the double valve body (12) and able to be acted upon via the second connection (18) is designed to be the same size or larger than the annular surface (30) on the output side between the rim (15) and the gate seat (10).

9. Change-over valve according to Claim 8, characterized in that the spring (13) assigned to the double valve body (12) is supported on the housing side.

10. Change-over valve according to Claim 1, characterized in that the control plunger (2) is assigned a control chamber (3), which is in connection via a connecting line (32, 35, 37) with the one input connection (16), and in that in the connecting line there is arranged a solenoid valve (33), which either establishes or blocks off the passage in the connecting line.

## Revendications

1. Soupape de commutation pour véhicules, destinée à assurer une liaison sélectionnée d'un parmi deux raccordements d'entrée (16, 18) véhiculant une pression à un raccordement de sortie (21), présentant les caractéristiques suivantes :
- un opercule double (12) est suspendu élastiquement dans un corps de soupape (1) et forme une première soupape de passage (12, 15) avec une bordure (15), dotée d'un creusement, du corps de soupape (1)),
- un piston de commande (2) est monté déplaçable de façon étanche dans le corps de soupape et forme une deuxième soupape de passage (10, 12) avec l'opercule double (12),
- au moins un piston creux (24, 41), isolé de manière étanche et déplaçable de façon limitée entre deux butées, est associé à l'opercule double (12),
- l'un des deux raccordements d'entrée (16, 18) est raccordé à chacune des deux soupapes de passage,
- le piston creux (24,41) présente une première surface active sollicitée par le raccordement d'entrée (16) et une deuxième surface active, disposée dans le sens opposé par rapport à la première et sollicitée par le deuxième raccordement d'entrée (18).

2. Soupape de commutation selon la revendication 1, caractérisée en ce que le piston creux (24) est prévu pour entourer l'opercule double (12) et est monté déplaçable de façon limitée entre une butée placée sur le corps de soupape (1) et une butée placée sur l'opercule double (12).

3. Soupape de commutation selon la revendication 1 ou 2, caractérisée en ce que le piston creux (41) est guidé étanche dans l'opercule double (12) et subdivise un espace de commande (44) placé par l'intermédiaire de la conduite de liaison (45) en liaison permanente avec la chambre d'entrée d'écoulement (11), respectivement la conduite de commande (17).

4. Soupape de commutation selon la revendication 3, caractérisée en ce que le piston creux (41) disposé dans l'opercule double (12) présente un prolongement de pression (46) associé au prolongement (6) du piston de commande (2) et servant à l'ouverture de la deuxième soupape de passage (10, 12).

5. Soupape de commutation selon l'une des revendications 1 à 4, caractérisée en ce qu'un piston creux extérieur et un piston creux intérieur (24,41) sont associés à l'opercule double (12) et au piston de commande (2).

6. Soupape de commutation selon la revendication 5, caractérisée en ce que le piston creux extérieur ou le piston creux intérieur (24) présente des deux côtés des surfaces actives (27, 28) de même taille.

7. Soupape de commutation selon l'une des revendications 1 à 6, caractérisée en ce que l'opercule double (12) présente une surface active (31) agissant dans la direction de la fermeture de la première soupape de passage (12, 15) formée par la bordure (15) et l'opercule double (12), susceptible d'être sollicité par le premier raccordement (16), réalisé avec des aires à peu près identiques à la surface d'anneau de cercle (30) située côté sortie, entre la bordure (15) et le siège de passage (10).

8. Soupape de commutation selon l'une des revendications 1 à 7, caractérisée en ce que la surface active (28) agissant dans la direction d'appui du piston creux (24) sur l'opercule double (12) et susceptible d'être sollicitée par l'intermédiaire du deuxième raccordement (18) est réalisée d'aire égale ou supérieure à celle de la surface d'anneau de cercle (30) située côté sortie, entre la bordure (15) et le siège de passage (10).

9. Soupape de commutation selon la revendication 8, caractérisée en ce que le ressort (13) associé à l'opercule double (12) prend appui coté carter.

10. Soupape de commutation selon la revendication 1, caractérisée en ce qu'une chambre de commande (3) reliée par l'intermédiaire d'une conduite de liaison (32, 35, 37) à un raccordement d'entrée (16) est associé au piston de commande (2) et en ce qu'une électrovanne (33) établissant ou bloquant le passage dans la conduite de liaison est disposée dans cette dernière.
